(19) Europäisches Patentamt / European Patent Office / Office européen des brevets

(11) **EP 4 084 563 B1**

(12) **EUROPEAN PATENT SPECIFICATION**

(45) Date of publication and mention of the grant of the patent:
**08.05.2024 Bulletin 2024/19**

(21) Application number: **22179385.4**

(22) Date of filing: **05.02.2018**

(51) International Patent Classification (IPC):
$H04W\ 72/12^{(2023.01)}$        $H04L\ 5/00^{(2006.01)}$
$H04W\ 72/04^{(2023.01)}$        $H04W\ 88/06^{(2009.01)}$

(52) Cooperative Patent Classification (CPC):
**H04L 5/0007; H04L 5/0092; H04W 72/1215;**
H04L 5/0023; H04L 5/0051; H04W 88/06

(54) **METHOD AND APPARATUS FOR MANAGING RESOURCES FOR COEXISTENCE OF LONG TERM EVOLUTION SYSTEM AND NEW RADIO SYSTEM**

VERFAHREN UND VORRICHTUNG ZUR VERWALTUNG VON RESSOURCEN ZUR KOEXISTENZ VON LTE-SYSTEMEN UND NEW-RADIO-SYSTEM

PROCÉDÉ ET APPAREIL DE GESTION DE RESSOURCES POUR LA COEXISTENCE DE SYSTÈME D'ÉVOLUTION À LONG TERME ET NOUVEAU SYSTÈME RADIO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.02.2017 KR 20170015843**

(43) Date of publication of application:
**02.11.2022 Bulletin 2022/44**

(62) Document number(s) of the earlier application(s) in accordance with Art. 76 EPC:
**18748305.2 / 3 563 618**

(73) Proprietor: **Samsung Electronics Co., Ltd.**
**Gyeonggi-do, 16677 (KR)**

(72) Inventors:
- **YUN, Yeohun**
  **Suwon-si 16677 (KR)**
- **KIM, Yongok**
  **Suwon-si 16677 (KR)**
- **KIM, Chanhong**
  **Suwon-si 16677 (KR)**
- **RYU, Hyunseok**
  **Suwon-si 16677 (KR)**
- **YOO, Hyunil**
  **Suwon-si 16677 (KR)**
- **NOH, Jeehwan**
  **Suwon-si 16677 (KR)**
- **XUE, Peng**
  **Suwon-si 16677 (KR)**
- **SEOL, Jiyun**
  **Suwon-si 16677 (KR)**

(74) Representative: **Nederlandsch Octrooibureau**
**P.O. Box 29720**
**2502 LS The Hague (NL)**

(56) References cited:
**WO-A1-2016/070427        US-A1- 2018 035 416**

- **HUAWEI ET AL: "Consideration of PRB misalignment between NR and LTE in the coexistence case", 3GPP DRAFT; R1-1700030, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170116 - 20170120 9 January 2017 (2017-01-09), XP051202456, Retrieved from the Internet: URL:http://www.3gpp.org/ftp/tsg_ran/WG1_RL 1/TSGR1_AH/NR_AH_1701/Docs/ [retrieved on 2017-01-09]**
- **ETRI: "Remaining issues on NR frequency domain frame structure", 3GPP DRAFT; R1-1700585 REMAINING ISSUES ON NR FREQUENCY DOMAIN FRAME STRUCTURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Spokane, USA; 20170116 - 20170120 10 January 2017 (2017-01-10), XP051202973, Retrieved from the Internet: URL:http://www.3gpp.org/ftp/tsg_ran/WG1_RL 1/TSGR1_AH/NR_AH_1701/Docs/ [retrieved on 2017-01-10]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**[Technical Field]**

The disclosure relates to resource management for coexistence of a long term evolution (LTE) system and a new radio (NR) system.

**[Background Art]**

In order to meet the demand for wireless data traffic that is on an increasing trend after commercialization of fourth generation (4G) communication systems, efforts have been made to develop improved fifth generation (5G) or pre-5G communication system. For this reason, the 5G or pre-5G communication system is also called a beyond 4G network communication system or a post long term evolution (LTE) system.

In order to achieve high data rate, implementation of a 5G communication system in an ultrahigh frequency (mmWave) band (e.g., like 60 GHz band) has been considered. In order to mitigate a path loss of radio waves and to increase a transfer distance of the radio waves in the ultrahigh frequency band, technologies of beamforming, massive multiple input multiple output (MIMO), full dimension MIMO (FD-MIMO), an array antenna, analog beamforming, and a large scale antenna for the 5G communication system have been discussed.

Further, for system network improvement in the 5G communication system, technology developments have been made for an evolved small cell, advanced small cell, cloud radio access network (RAN), ultra-dense network, device-to-device (D2D) communication, wireless backhaul, moving network, cooperative communication, coordinated multi-points (CoMP), and reception interference cancellation. In addition, in the 5G system, hybrid frequency-shift keying and quadrature amplitude modulation (FQAM) and sliding window superposition coding (SWSC), which correspond to advanced coding modulation (ACM) systems, and filter bank multicarrier (FBMC), non-orthogonal multiple access (NOMA), and sparse code multiple access (SCMA), which correspond to advanced access technologies, have been developed.

On the other hand, the Internet, which is a human centered connectivity network where humans generate and consume information, is now evolving to the internet of things (IoT) where distributed entities, such as things, exchange and process information. The internet of everything (IoE), which is a combination of the IoT technology and big data processing technology through a connection with a cloud server, has emerged. As technology elements, such as sensing technology, wired/wireless communication and network infrastructure, service interface technology, and security technology, have been demanded for IoT implementation, a sensor network for machine-to-machine connection, machine-to-machine (M2M) communication, machine type communication (MTC), and so forth have been recently researched. Such an IoT environment may provide intelligent internet technology (IT) services that create a new value to human life by collecting and analyzing data generated among connected things. The IoT may be applied to a variety of fields including smart home, smart building, smart city, smart car or connected cars, smart grid, health care, smart appliances and advanced medical services through convergence and combination between the existing information technology (IT) and various industries.

Accordingly, various attempts have been made to apply the 5G communication system to IoT networks. For example, technologies of sensor network, M2M communication, and MTC have been implemented by techniques for beam-forming, MIMO, and array antennas, which correspond to the 5G communication technology. As the big data processing technology as described above, application of a cloud RAN would be an example of convergence between the 5G technology and the IoT technology.

A new radio access technology for the 5G communication system has recently been discussed in the 3rd generation partnership project (3GPP). The new radio technology takes aim at support of various services, for example, an enhanced mobile broadband (eMBB), an ultra-reliable low latency communication (URLLC), and a massive machine type communication (mMTC). In order to attain such a goal, there have been discussions on the communication standards. Further, in order to support such various services, it is necessary to evolve from the existing LTE requiring multi-numerology, flexibility, and forward compatibility, into a form capable of accommodating all different requirements for the various services. Discussions to make such an evolution possible have been made. Further, together with such discussions toward the 5G, coexistence of the existing system, that is, 4G LTE, and the 5G new radio (NR) has been discussed. This can be historically understood in the same vein as the coexistence of the existing communication system and a new communication system, which was considered whenever an evolution into a new communication generation was made. However, as compared with the existing 4G LTE, the 5G NR has many changes at several points. Accordingly, there are many points to be considered for the coexistence of the LTE system and the NR system. The 3GPP publication R1-1700030 "Consideration of PRB misalignment between NR and LTE in the coexistence case", by HUAWEI et AL., provides information regarding the co-existence of LTE and NR networks.

The above information is presented as background information only to assist with an understanding of the disclosure. No determination has been made, and no assertion is made, as to whether any of the above might be applicable as prior art with regard to the disclosure.

## [Disclosure of Invention]

### [Technical Problem]

Aspects of the disclosure are to address at least the above-mentioned problems and/or disadvantages and to provide at least the advantages described below. Accordingly, an aspect of the disclosure is to provide a method for solving problems that may occur in accordance with the shape of a resource block (RB) grid of the new radio (NR) system.

The disclosure takes aim at solving a RB grid mismatch problem due to a difference between direct current (DC) subcarrier handling methods in case where a long term evolution (LTE) system and a NR system coexist in the same frequency band. Specifically, if an LTE system and an NR system coexist, several problems may occur in accordance with the shape of an RB grid of the NR system. An aspect of the disclosure proposes a method for solving such problems.

Another aspect of the disclosure is to provide a method for operating a cycling pattern of a precoder/beam cycling technology to support scalable domain and cycling granularity. In order to support the scalable cycling pattern, the disclosure defines indication information to be transferred to a terminal and an operation procedure of the terminal. Specifically, the disclosure provides methods for solving the problem of application of different precoders/beams that may occur by applying an orthogonal cover code (OCC) to a reference signal (RS).

### [Solution to Problem]

The invention is defined by the appended claims.

### [Advantageous Effects of Invention]

In accordance with an aspect of the disclosure, if the LTE system and the NR system coexist in the same frequency band, efficiency of a resource operation can be heightened, and interference between the LTE system and the NR system can be minimized.

In accordance with another aspect of the disclosure, reliability of a link can be heightened by securing a diversity gain to a terminal having high mobility through the precoder/beam cycling technology during transmission of semi-open-loop precoding. Specifically, it is possible to support various scalable cycling patterns suitable for various radio channel environment scenarios.

Other aspects, advantages, and salient features of the disclosure will become apparent to those skilled in the art from the following detailed description, which, taken in conjunction with the annexed drawings, discloses various embodiments of the disclosure.

### [Brief Description of Drawings]

The above and other aspects, features, and advantages of certain embodiments of the disclosure will be more apparent from the following description taken in conjunction with the accompanying drawings, in which:

FIGS. 1a and 1b illustrate downlink resource allocation for a long term evolution (LTE) system;
FIGS. 2a and 2b illustrate uplink resource allocation for an LTE system;
FIG. 3 illustrates an example of an resource block (RB) grid in a new radio (NR) system;
FIGS. 4a and 4b are flowcharts when system information, such as a sync signal, master information block (MIB), system information block (SIB), and/or random access channel (RACH) configuration, is received according to an embodiment of the disclosure;
FIG. 5 illustrates an example in which a shift operation is performed, and an RB grid of an LTE system and an RB grid of an NR system coincide with each other according to an embodiment of the disclosure;
FIGS. 6 and 7 illustrate an example of an RB grid in case where an LTE system uses odd-numbered RBs in an uplink according to an embodiment of the disclosure;
FIG. 8 illustrates an example of RB grids of an LTE system and an NR system in a downlink according to an embodiment of the disclosure;
FIG. 9 illustrates an example where an LTE system uses odd-numbered RBs in a downlink according to an embodiment of the disclosure;
FIGS. 10 and 11 illustrate examples of cycling patterns of precoder cycling;

FIG. 12 illustrates an embodiment of a cycling pattern satisfying criterion 1 according to an embodiment of the disclosure;

FIG. 13 illustrates an embodiment in which precoders adopted on a demodulation reference signal (DM-RS) coincide with each other in case of 4 layers according to an embodiment of the disclosure;

FIG. 14 illustrates an embodiment according to Alt-1.3 of the disclosure;

FIG. 15 is a flowchart illustrating an operation procedure of a base station for supporting a scalable predecoder pattern according to an embodiment of the disclosure;

FIG. 16 is a diagram illustrating an operation procedure of a terminal for supporting a scalable predecoder cycling pattern according to an embodiment of the disclosure;

FIG. 17 is a diagram illustrating an operation procedure of a base station for supporting a scalable analog beam cycling pattern according to an embodiment of the disclosure;

FIG. 18 is a diagram illustrating an operation procedure of a terminal for supporting a scalable analog beam cycling pattern according to an embodiment of the disclosure;

FIG. 19 is a block diagram of a user equipment (UE) according to an embodiment of the disclosure; and

FIG. 20 is a block diagram of a base station according to an embodiment of the disclosure.

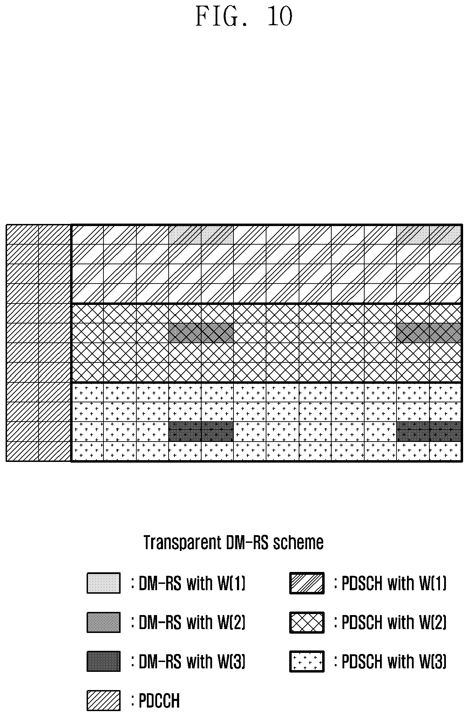

The embodiments illustrated in figures 10-18 do not fall under the scope of protection of the present claims.

Throughout the drawings, it should be noted that like reference numbers are used to depict the same or similar elements, features, and structures.

**[Mode for the Invention]**

The following description with reference to the accompanying drawings is provided to assist in a comprehensive understanding of various embodiments of the disclosure as defined by the claims. It includes various specific details to assist in that understanding but these are to be regarded as merely exemplary. Accordingly, those of ordinary skill in the art will recognize that various changes and modifications of the various embodiments described herein can be made without departing from the scope of the disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the disclosure. Accordingly, it should be apparent to those skilled in the art that the following description of various embodiments of the disclosure is provided for illustration purpose only and not for the purpose of limiting the disclosure as defined by the appended claims.

It is to be understood that the singular forms "a," "an," and "the" include plural referents unless the context clearly dictates otherwise. Thus, for example, reference to "a component surface" includes reference to one or more of such surfaces.

Further, in explaining embodiments of the disclosure in detail, although an advanced evolved universal mobile telecommunications system (UMTS) terrestrial radio access (advanced E-UTRA) (i.e., a long term evolution (LTE) - advanced (LTE-A)) system supporting carrier aggregation will be the main subject, the primary subject matter of the disclosure can be applied to other communication systems having similar technical backgrounds and channel types with slight modifications that do not deviate from the scope of the disclosure, and this will be able to be done by the judgement of those skilled in the art to which the disclosure pertains. For example, the primary subject matter of the disclosure can be applied even to a multicarrier high speed packet access (HSPA) system supporting the carrier aggregation.

In explaining embodiments of the disclosure, explanation of technical contents which are well known in the art to which the disclosure pertains and are not directly related to the disclosure will be omitted. This is to transfer the subject matter of the disclosure more clearly without obscuring the same through omission of unnecessary explanations.

For the same reason, in the accompanying drawings, sizes and relative sizes of some constituent elements may be exaggerated, omitted, or briefly illustrated. Further, sizes of the respective constituent elements do not completely reflect the actual sizes thereof. In the drawings, the same drawing reference numerals are used for the same or corresponding elements across various figures.

The aspects and features of the disclosure and methods for achieving the aspects and features will be apparent by referring to the embodiments to be described in detail with reference to the accompanying drawings. However, the disclosure is not limited to the embodiments disclosed hereinafter, but can be implemented in diverse forms. The matters defined in the description, such as the detailed construction and elements, are nothing but specific details provided to assist those of ordinary skill in the art in a comprehensive understanding of the disclosure, and the disclosure is only defined within the scope of the appended claims. In the entire description of the disclosure, the same drawing reference numerals are used for the same elements across various figures.

In this case, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer-usable or computer-readable memory that can direct a computer or other programmable data processing apparatus to function in a particular manner, such that the instructions stored in the computer-usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Also, each block of the flowchart illustration may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term "unit", as used in an embodiment, means, but is not limited to, a software or hardware component, such as field-programmable gate array (FPGA) or application specific integrated circuit (ASIC), which performs certain tasks. However, "unit" does not mean to be limited to software or hardware. The term "unit" may be configured to reside on the addressable storage medium and configured to execute on one or more processors. Thus, "unit" may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and "units" may be combined into fewer components and "units" or further separated into additional components and "units". Further, the components and "units" may be implemented to operate one or more central processing units (CPUs) in a device or a security multimedia card.

First Embodiment

Hereinafter, various embodiments will be described in detail with reference to the accompanying drawings. The accompanying drawings are provided to help understanding of the disclosure, and it should be noted that the disclosure is not limited to any shape or deployment exemplified in the drawings. Further, detailed explanation of well-known functions and configurations will be omitted since they would obscure the disclosure in unnecessary detail. In the following description, it should be noted that only portions that are necessary to understand the operations according to various embodiments of the disclosure will be described, but explanation of other portions will be omitted if they obscure the subject matter of the disclosure.

Hereinafter, various embodiments of the disclosure will be described with reference to the accompanying drawings. However, it should be understood that the disclosure is not limited to the specific embodiments described hereinafter, but includes various modifications, equivalents, and/or alternatives of the embodiments of the disclosure. In relation to explanation of the drawings, similar drawing reference numerals may be used for similar constituent elements. A singular expression may include a plural expression unless specially described. In the description, the term "A or B" or "at least one of A and/or B" includes all possible combinations of words enumerated together. The terms "first" and "second" used in various embodiments may describe various constituent elements, but they should not limit the corresponding constituent elements. For example, the above-described terms do not limit the order and/or importance of the corresponding constituent elements, but may be used to differentiate a constituent element from other constituent elements. When it is described that an (e.g., first) element is "connected" or "coupled" to another (e.g., second) element (functionally or communicatively), the element may be "directly connected" to the other element or "connected" to the other element through another (e.g., third) element.

For explanation of the disclosure, an LTE resource operation will be first described.

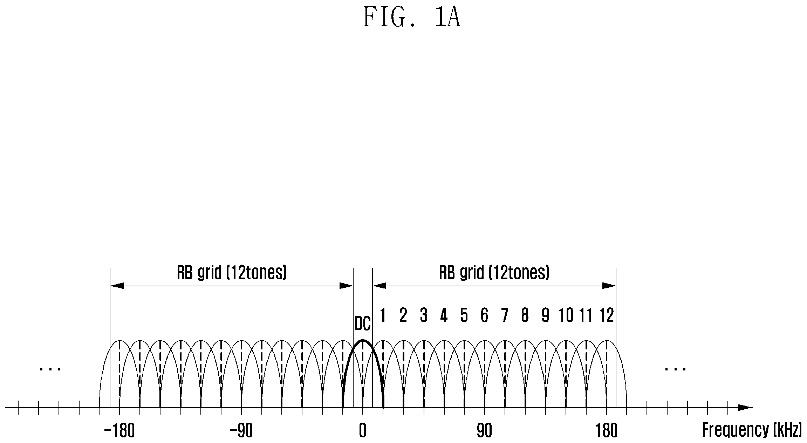

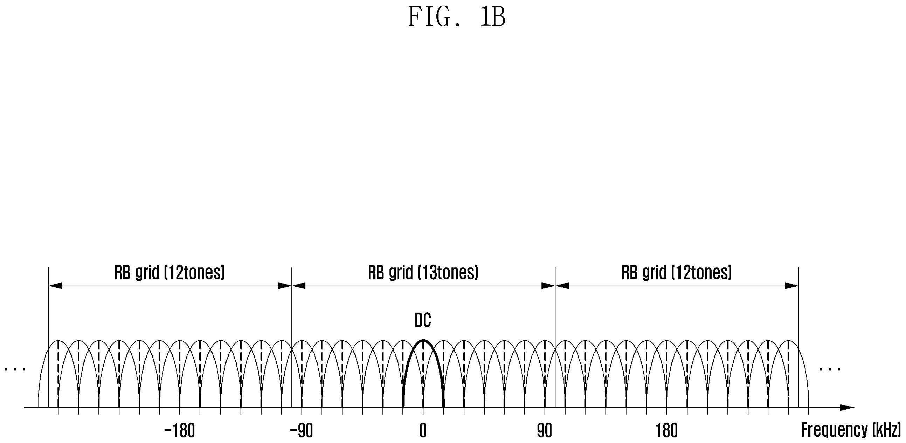

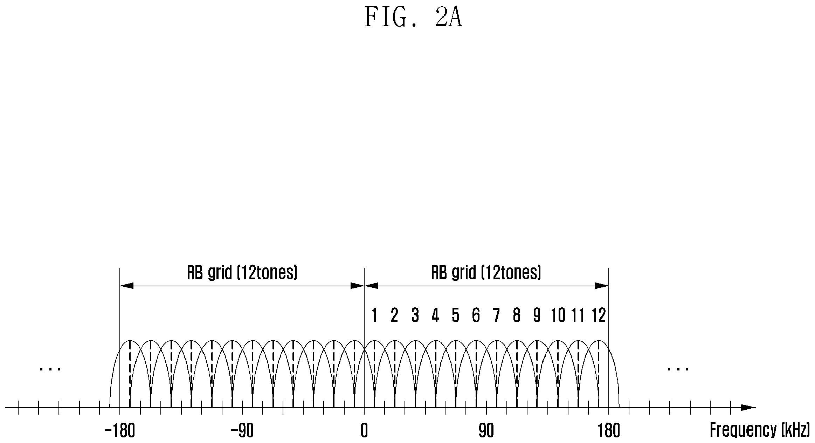

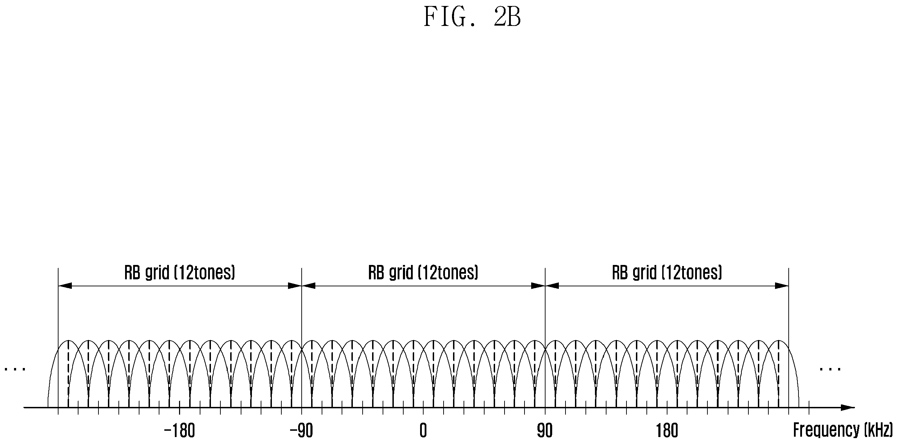

FIGS. 1a and 1b illustrate downlink resource allocation for an LTE system, and FIGS. 2a and 2b illustrate uplink resource allocation for an LTE system.

Referring to FIGS. 1a and 2a, an example is illustrated where a channel bandwidth is composed of even- numbered resource blocks (RBs). For example, 50 RBs may exist in the channel bandwidth of 10 MHz, or 100 RBs may exist in the channel bandwidth of 20 MHz. FIGS. 1b and 2b illustrate a case where a channel bandwidth is composed of odd-numbered RBs. For example, 25 RBs may exist in the channel bandwidth of 5 MHz.

Referring to FIGS. 1a and 1b, in a downlink for LTE, a resource is not allocated to a direct current (DC) subcarrier in order to solve a DC problem.

Referring to FIGS. 2a and 2b, in an uplink for LTE, the center of a subcarrier is not deployed in a DC location.

However, in the fifth generation (5G) new radio (NR) system, resources are allocated to all subcarriers regardless of the DC location. Accordingly, several combinations are possible in a situation where the LTE system and the NR system coexist in accordance with the shape of an RB grid of the NR system.

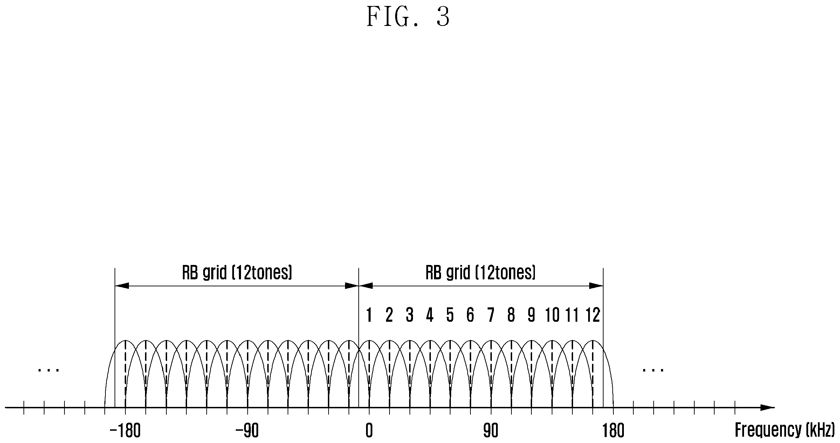

FIG. 3 illustrates an example of an RB grid in an NR system according to an embodiment of the disclosure.

Referring to FIG. 3, if an RB grid in the uplink of the NR system is given as shown in FIG. 3, that is, if the center of NR subcarriers is located in the 15 kHz grid, as compared with the case of the uplink of the LTE system (i.e., in FIGS. 2a and 2b), it can be known that there is a difference between the center location of subcarriers in the NR system and the center location of subcarriers in the LTE system. For example, the difference may be 7.5 kHz (hereinafter, it is assumed that the difference is 7.5 kHz). As described above, if the LTE system and the NR system share the channel bandwidth, and frequency-division multiplexing (FDM) methods coexist through resource allocation of physical resource block (PRB) levels, interference may occur even if the LTE system and the NR system have the same subcarrier spacing.

Accordingly, in case of entering into a cell and receiving system information, such as a sync signal, master information block (MIB), system information block (SIB) and/or random access channel (RACH) configuration (the alternatives of a synchronization signal, a MIB on a PBCH, a RACH configuration are not falling under the scope of protection of the present claims), a terminal of the NR system is indicated whether to coexist with the LTE system and/or whether to perform a shift operation, and in transmitting an uplink signal, it performs a shift operation to the extent of 7.5 kHz. As a result, the NR system can have the same RB grid as that of the LTE system. It is preferable that such a shift operation is performed from an initial uplink transmission time (e.g., RACH transmission time) in order to avoid interference with the LTE system.

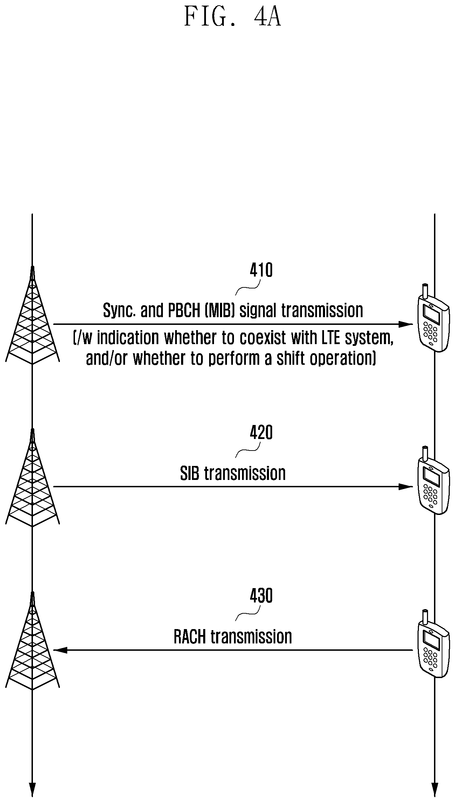

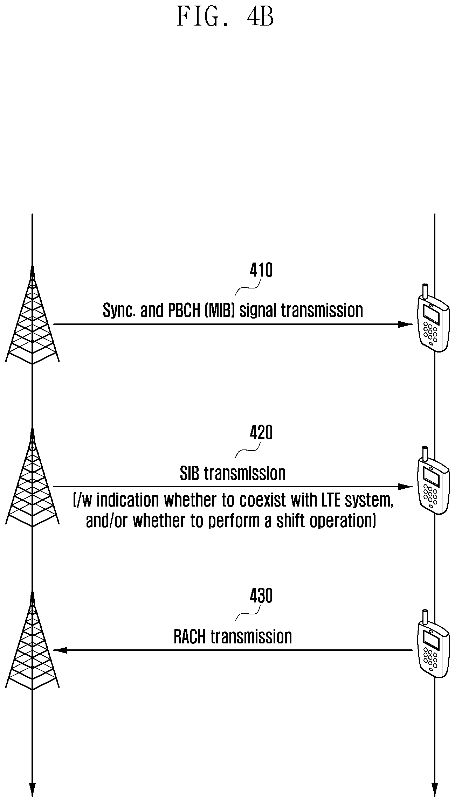

FIGS. 4a and 4b are flowcharts when system information, such as a sync signal, MIB, SIB, and/or RACH configuration, is received according to an embodiment of the disclosure.

Referring to FIGS. 4a and 4b, a base station transmits to a terminal a sync signal and an MIB through a physical broadcast channel (PBCH) at operation 410, and based on this, it transmits an SIB at operation 420. In response to this, the terminal performs a RACH transmission at operation 430. During transmission of the sync signal and the MIB at operation 410 (in case of FIG. 4a) or during transmission of the SIB at operation 420 (in case of FIG. 4b), the base station may indicate to the terminal whether to coexist with the LTE system and/or whether to perform a shift operation.

As described above, the terminal receives from the base station an indication on whether to coexist with the LTE system and/or whether to perform a shift operation through system information, such as a sync signal, MIB, SIB, and/or RACH configuration (the alternatives of a synchronization signal, a MIB on a PBCH, a RACH configuration are not falling under the scope of protection of the present claims), and in each case, the terminal may perform uplink transmission based on the following mathematical expressions for transmission. Specifically, if it is indicated not to coexist with the LTE system or not to perform the shift operation, the terminal performs the uplink transmission based on Expression 1 below.

【Math Figure 1】

$$s_l^{(p)}(t) = \sum_{k=-\lfloor N_{RB}^{DL} N_{sc}^{RB}/2 \rfloor}^{\lceil N_{RB}^{DL} N_{sc}^{RB}/2 \rceil - 1} a_{k^{(-)},l}^{(p)} \cdot e^{j2\pi k \Delta f(t - N_{CP,l} T_s)}, \quad k^{(-)} = k + \lfloor N_{RB}^{UL} N_{sc}^{RB}/2 \rfloor$$

In case of coexisting with the LTE system and performing the shift operation, the terminal performs the uplink transmission based on Mathematical Expression 2 below. That is, the terminal performs a shift to the extent of with respect to the uplink signal.

【Math Figure 2】

$$s_l^{(p)}(t) = \sum_{k=-\lfloor N_{RB}^{DL} N_{sc}^{RB}/2 \rfloor}^{\lceil N_{RB}^{DL} N_{sc}^{RB}/2 \rceil - 1} a_{k^{(-)},l}^{(p)} \cdot e^{j2\pi k \Delta f(t - N_{CP,l} T_s)} \cdot e^{j2\pi \Delta f_m t}$$

The shift value $\Delta f_m$ may be determined in accordance with a value of subcarrier spacing. If the subcarrier spacing is 15 kHz, $\Delta f_m$ is 7.5 kHz.

The shift operation may be implemented through a baseband mix. A method through the baseband mix has the advantage that the shift operation becomes possible without changing a radio frequency (RF) part of the terminal. As an alternative method, the shift operation can be implemented by adding an additional shift to the extent of 7.5 kHz to the RF mix without changing the operation of a baseband end. However, if the shift operation is performed, the shift should be applied even with respect to the existing designed filtering, and thus it is preferable to perform the shift operation after the baseband filtering even in the case of using the baseband mix.

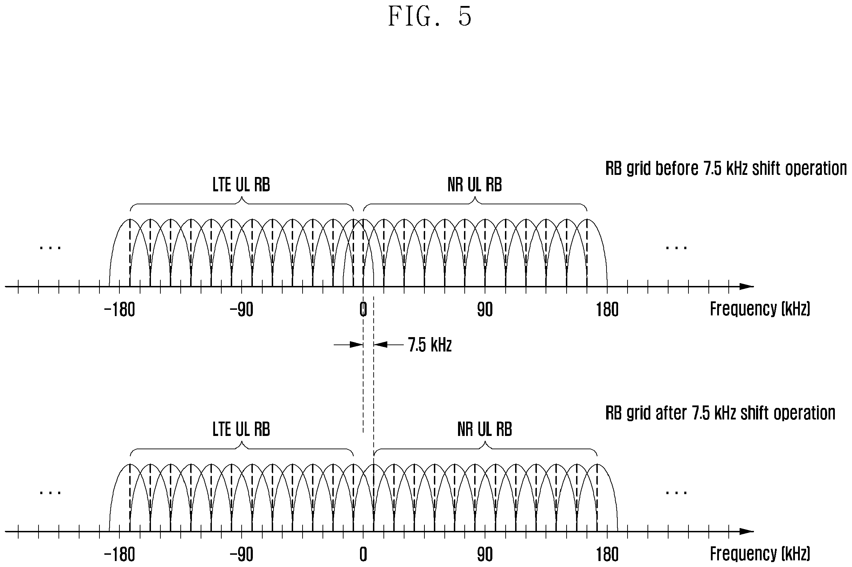

FIG. 5 illustrates an example in which a shift operation is performed, and an RB grid of an LTE system and an RB grid of an NR system coincide with each other according to an embodiment of the disclosure.

Referring to FIG. 5, uplink RBs of the NR system are shifted for 7.5 kHz, and the grid thereof coincides with that of the LTE uplink RBs.

In an embodiment of FIG. 5, the LTE system has even-numbered RBs in the channel bandwidth. However, a case may also be considered, in which the LTE system has odd-numbered RBs and the NR system has even-numbered RBs in the channel bandwidth.

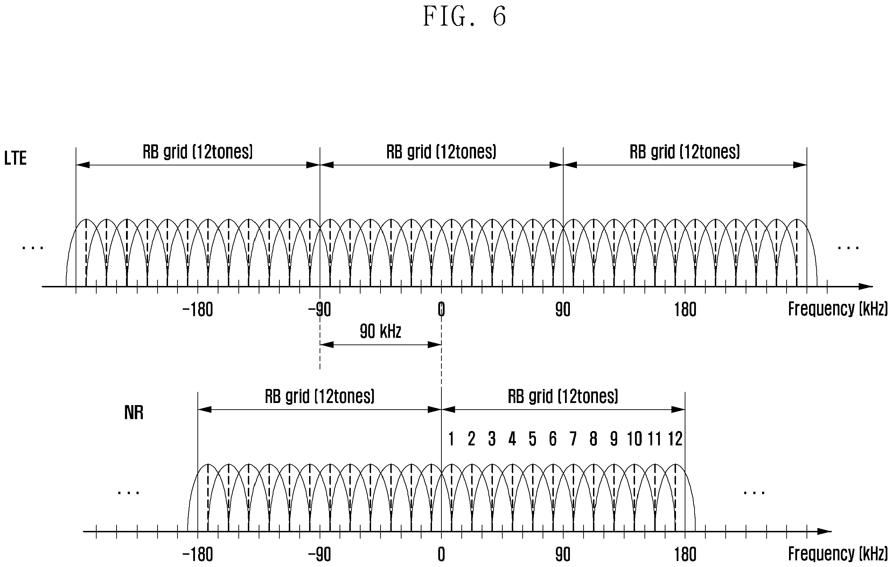

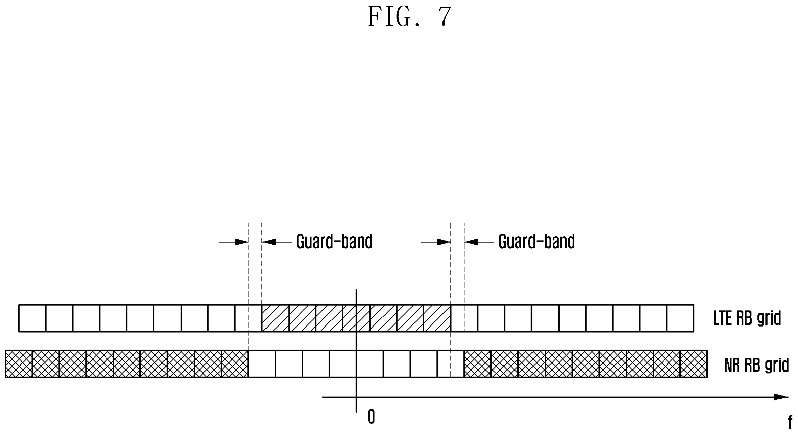

FIGS. 6 and 7 illustrate an example of an RB grid in case where an LTE system uses odd-numbered RBs in an uplink according to an embodiment of the disclosure.

Referring to FIG. 6, an LTE system has 25 RBs in the channel bandwidth of 5 MHz, and an NR system has 26 RBs in the channel bandwidth of 4.68 MHz. If it is assumed that an RB grid of the LTE system is the same as that in FIG. 2B, and an RB grid of the NR system is the same as that in FIG. 3, an additional grid difference to the extent of 90 kHz occurs. Here, the term "additional" means an additional grid difference after 7.5 kHz shift applied to the case of FIG. 5.

Accordingly, referring to FIG. 7, the additional grid difference may be used as a guard-band of LTE-NR through an RB grid operation. In this case, since the guard-band can be secured between the LTE and the NR, the operation becomes possible even without 7.5 kHz shift performed in FIG. 5. That is, if both the LTE and the NR have even-numbered RBs or odd-numbered RBs at the same time, the RB grids coincide with each other after 7.5 kHz shift is performed, and thus the interference can be removed even without using the guard-band. Otherwise (e.g., if the LTE has odd-numbered RBs and the NR has even-numbered RBs), the guard-band can be secured as shown in FIG. 7, and thus 7.5 kHz shift may not be performed. However, in case of the LTE, there is not a sub-band reception filter, and thus the amount of interference from the NR to the LTE is still large in spite of the existence of the guard-band. Accordingly, in order to perfectly remove the interference, even 7.5 kHz shift can be performed.

Next, a case of a downlink (DL) is considered. In case of the DL, since the LTE does not perform resource allocation to a DC subcarrier, but the NR performs the resource allocation.

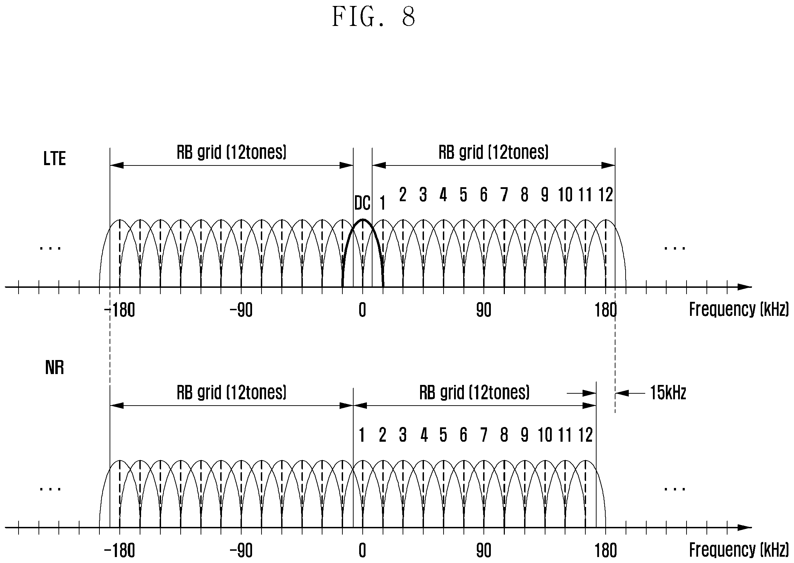

FIG. 8 illustrates an example of RB grids of an LTE system and an NR system in a downlink according to an embodiment of the disclosure.

Referring to FIG. 8, RB grid mismatch occurs. However, in this case, although the RB grid mismatch occurs, subcarrier grids coincide with each other. Accordingly, unlike the uplink, so far as the base station (BS) performs resource allocation well, the LTE-NR interference problem may not occur.

However, in consideration of the maximum utility of the channel bandwidth, the maximum RB utility is reduced by 1 RB due to the LTE-NR RB grid mismatch. Accordingly, if the NR matches the same RB grid as the RB grid of the LTE, a loss of the maximum RB utility can be prevented. In this case, unlike the uplink, the mismatch to the extent of 15 kHz occurs, and the shift operation can be easily implemented.

When the NR terminal enters into a cell and receives system information, such as a sync signal and/or MIB and/or SIB and/or RACH configuration, from a DL signal, it can receive such information.

As can be seen from FIG. 8, only a right RB based on the carrier center frequency mismatches with the LTE, and it is enough to correct only the right RB.

The following expression is an expression for downlink signal generation for LTE.

【Math Figure 3】

$$s_l^{(p)}(t) = \sum_{k=-\left\lfloor N_{RB}^{DL} N_{sc}^{RB}/2 \right\rfloor}^{-1} a_{k^{(-)},l}^{(p)} \cdot e^{j2\pi k\Delta f(t-N_{CP,l}T_s)} + \sum_{k=1}^{\left\lceil N_{RB}^{DL} N_{sc}^{RB}/2 \right\rceil} a_{k^{(+)},l}^{(p)} \cdot e^{j2\pi k\Delta f(t-N_{CP,l}T_s)}$$

Here, it is defined that $k^{(-)} = k + \left\lfloor N_{RB}^{DL} N_{sc}^{RB}/2 \right\rfloor$ and $k^{(+)} = k + \left\lfloor N_{RB}^{DL} N_{sc}^{RB}/2 \right\rfloor - 1$.

An expression for downlink signal generation for NR may be as follows.

In case where the LTE does not coexist,

【Math Figure 4】

$$s_l^{(p)}(t) = \sum_{k=-\lfloor N_{RB}^{DL} N_{sc}^{RB}/2 \rfloor}^{\lceil N_{RB}^{DL} N_{sc}^{RB}/2 \rceil - 1} a_{k^{(-)},l}^{(p)} \cdot e^{j2\pi k\Delta f(t - N_{CP,l}T_s)}$$

In case where the LTE coexists, and the RB grid mismatch is corrected,

【Math Figure 5】

$$s_l^{(p)}(t) = \sum_{k=-\lfloor N_{RB}^{DL} N_{sc}^{RB}/2 \rfloor}^{-1} a_{k^{(-)},l}^{(p)} \cdot e^{j2\pi k\Delta f(t - N_{CP,l}T_s)} + \sum_{k=1}^{\lceil N_{RB}^{DL} N_{sc}^{RB}/2 \rceil} a_{k^{(+)},l}^{(p)} \cdot e^{j2\pi k\Delta f(t - N_{CP,l}T_s)}$$

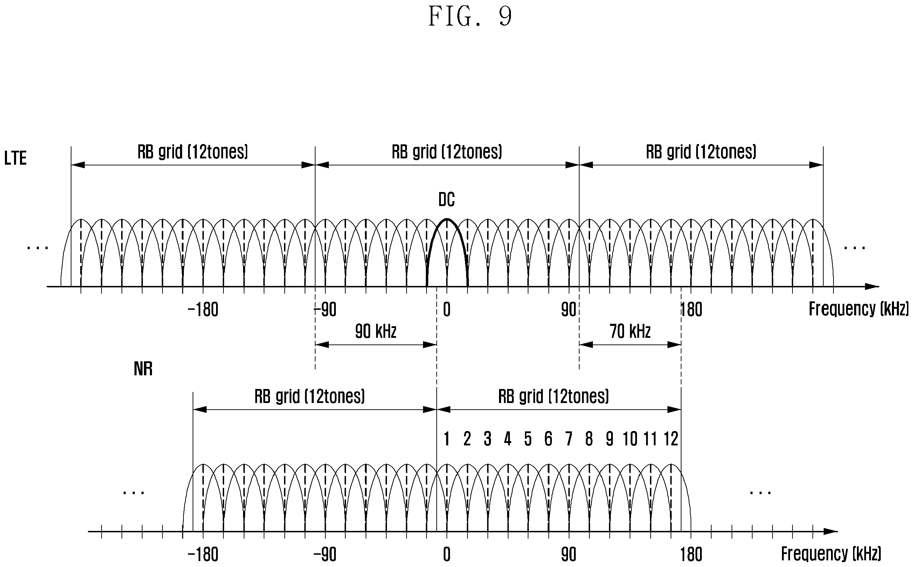

FIG. 9 illustrates an example where an LTE system uses odd-numbered RBs in a downlink according to an embodiment of the disclosure.

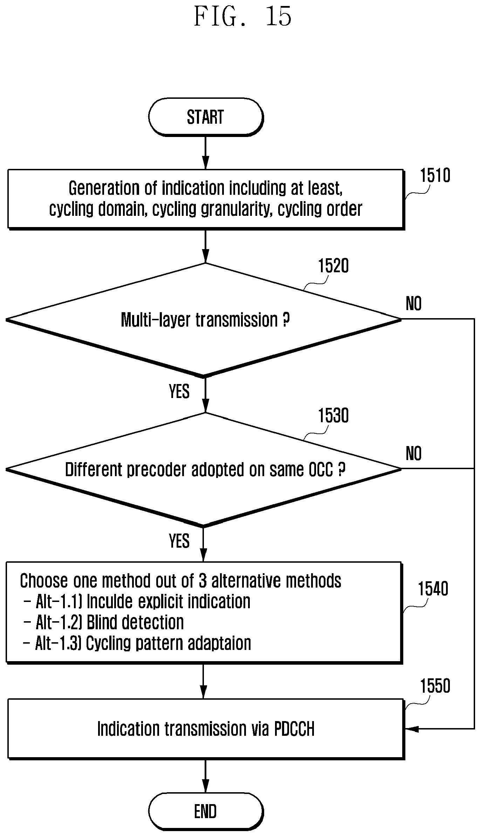

Referring to FIG. 9, a left RB based on the DC has a grid mismatch to the extent of 90 kHz, and a right RB has a grid mismatch to the extent of 75 kHz. Even in this case, if RB grids are deployed as shown in FIG. 7 and the BS performs scheduling so that the LTE and the NR do not overlap each other, the LTE-NR interference may not occur. Particularly, in this case, the subcarrier grids coincide with each other, and so far as the RBs are not allocated to overlap each other, additional interference does not occur. Accordingly, in this case, unlike the case of FIG. 8, 15 kHz correction indication may not be performed.

Second Embodiment, not falling under the scope of protection of the present claims

Semi-open-loop precoding transmission technology is a technology to transmit data by using only long-term channel state information (CSI) feedback information in a downlink transmission. Precoder cycling transmission technology is one of semi-open-loop precoding transmission technologies, and may be applied to a dual-stage precoding structure or the like proposed in LTE release 12 (Rel-12). In the dual-stage precoding, a terminal determines four preferential beams in a wide-band unit after CSI measurement, and feeds them back to a base station with W1 in a long-term period. Selection of one optimum one of the four selected beams and co-phasing between beams generated through different polarization are determined in a sub-band unit, and are fed back to the base station in a short-term period. Closed-loop transmission scheme determines a precoding matrix through multiplication of W1 and W2 that are two precoding matrix indicator (PMI) values acquired in different periods. If it is assumed that precoder cycling is performed as semi-open-loop precoding transmission under the above-described dual-stage precoding structure, the base station performs data transmission while cycling four candidate beams included in the pre-acquired W1 and four co-phasing values in a frequency domain. The disclosure proposes up to an operation method in accordance with a cycling pattern for supporting the precoder cycling technology and an operation method expanded to an analog beam cycling technology of hybrid beamforming considered in the NR.

It is assumed that the number of different precoders that the base station acquires from the terminal through the long-term feedback is N. In this case, N pre-fed-back precoders may be W(1) to W(N).

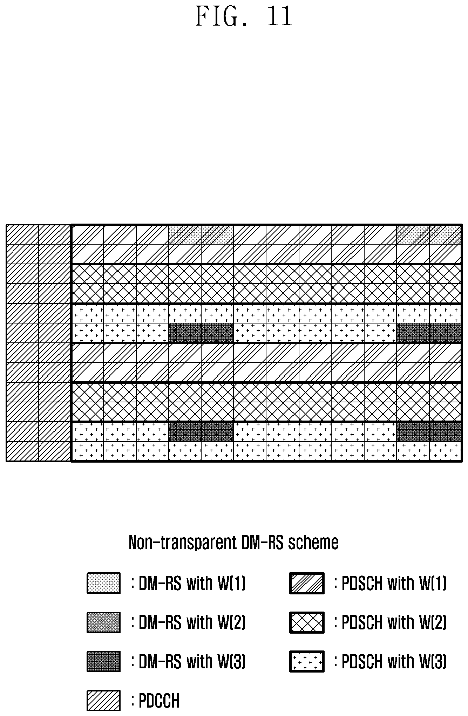

FIGS. 10 and 11 illustrate examples of cycling patterns of precoder cycling

Referring to FIGS. 10 and 11, the cycling is performed only in the frequency domain, and may be divided into a transparent demodulation reference signal (DM-RS) scheme in which the same precoding is used for DM-RS and data, and a non-transparent DM-RS scheme in which different precoding is used for DM-RS and data in accordance with granularity of the cycling pattern. Referring to FIG. 10, a physical downlink shared channel (PDSCH) area and a DM-RS area, to which W(2) is applied, are equal to each other, and there is no problem in estimating a channel through the DM-RS. Referring to FIG. 11, however, in case of the non-transparent DM-RS scheme, the DM-RS does not exist in the PDSCH area to which W(2) is applied, and thus it is difficult to perform channel estimation. For this, the terminal is designed to perform an upright channel estimation using a single cycling pattern predefined between the terminal and the base station.

The cycling pattern in the frequency domain in the related art may be limited in obtaining a diversity gain. A terminal having high mobility has a great channel change in accordance with time, and thus a cycling pattern for supporting this should be considered. Further, since the channel environment of the terminal differs and is dynamically changed, it is also required that the cycling pattern is dynamically changed.

In addition, a case where the precoder of W(2) is not adopted on the DM-RS as in an example of FIG. 11 may be considered. In this case, if W(2) matches well with the terminal and the precoder can provide the highest signal-to-noise ratio (SNR), the minimum SNR that is necessary for the channel estimation cannot be secured due to the nonexistence of the DM-RS on which W(2) is adopted, and thus the block error rate (BLER) performance of the PDSCH may deteriorate. Accordingly, in consideration of the above-described situation, two essential criteria for designing the cycling pattern may be as follows.

Criterion 1) It is required that the cycling pattern can be expanded with scalable granularity on frequency and time domains.

Criterion 2) The precoder cycling should be adopted even with respect to the DM-RS.

The disclosure proposes a method for operating a cycling pattern satisfying the above-described design criterion.

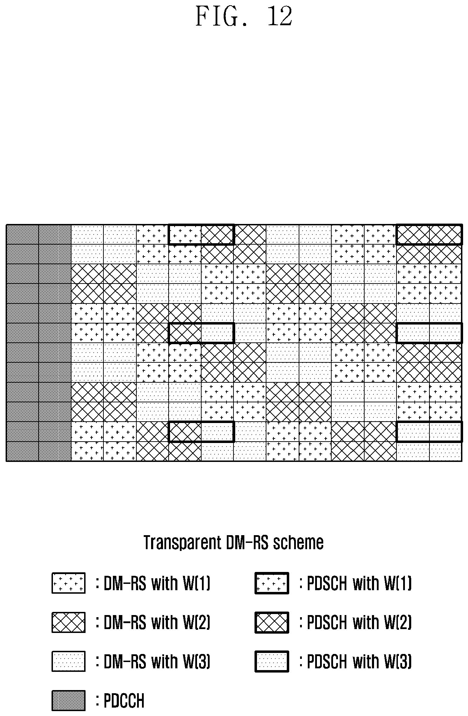

FIG. 12 illustrates an embodiment of a cycling pattern satisfying criterion 1 according to an embodiment of the disclosure.

Referring to FIG. 12, the adopted cycling granularity is 2 resource elements (REs) / 2 symbols. If the scalable cycling pattern is used as described above, the number of cases becomes large, and it is difficult to apply a channel estimation scheme through an engaged pattern between the base station and the terminal as in the related art. Accordingly, a method for the base station to explicitly notify the terminal through a downlink control information (DCI) is proposed.

Cycling pattern information contained in the DCI includes information on at least a domain to be cycled, cycling granularity, and the cycling order. The terminal receives resources allocated through physical downlink control channel (PDCCH) detection, whether to apply precoder cycling, and cycling pattern information. Through this, the terminal can successfully complete DM-RS channel estimation of an allocated resource and data reception. In this case, if the cycling order is directly transmitted, an overhead thereof becomes high. In order to solve this, a scheme may be considered, in which a function for generating the cycling pattern is predefined between the base station and the terminal, and only a specific seed value is adopted on an indication to be transmitted. An embodiment of a function for generating the cycling pattern is as follows.

【Math Figure 6】

$$W(k) \text{ on the } (m, n)\text{-th RE where } k = \mathrm{mod}(\mathrm{floor}\left(\frac{m-1}{x} + \frac{n-1}{y}\right) + z), N) + 1$$

Here, x, y, and z respectively mean a frequency-domain RE granularity, a time-domain symbol granularity, and an offset for determining the cycling start order. Through the above-described method, the base station may notify the terminal of the cycling granularity, cycling domain, and offset of the cycling order through indication of x, y, and z information only. FIG. 12 illustrates an embodiment in case of x=y=2 and z=0.

In consideration of multilayer transmission, an orthogonal cover code (OCC) is adopted on the DM-RS. In this case, if an effective channel between REs on which the OCC is adopted is changed, channel estimation becomes difficult, and the same precoder should be used between the REs on which the OCC is adopted. Referring again to the embodiment of FIG. 12, in case of 2-layer transmission, the OCCs of [1, 1] and [1, -1] are adopted on respective layers of two successive REs on time axis, and it can be seen that different precoders are adopted on the successive REs of the left DM-RS of FIG. 12. In case of 4-layer transmission, the length of the OCC becomes 4, and all DM-RSs corresponding to the same subcarriers should have the same precoders.

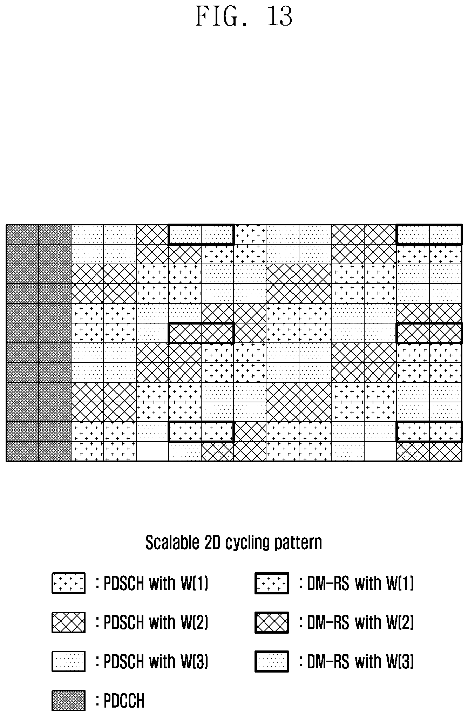

FIG. 13 illustrates an embodiment in which precoders adopted on a DM-RS coincide with each other in case of 4 layers.

Referring to FIG. 13, in order to solve this issue, the following methods are proposed.

Alt-1.1. A method in which the same precoder is adopted on a DM-RS corresponding to the same OCC, and a terminal is explicitly notified of the corresponding precoder through a DCI

Alt-1.2. A method in which the same precoder is adopted on a DM-RS corresponding to the same OCC, and a terminal is implicitly notified of the precoder adopted on the DM-RS

Alt-1.3. A method in which a cycling pattern is controlled so that the same precoder is adopted on a DM-RS in the same OCC through adjustment of cycling granularity in accordance with a layer

In case where the OCC length is 4, all DM-RSs corresponding to the same subcarrier should use the same precoder, and different precoders are cycled and adopted on respective DM-RSs in accordance with pattern design criterion 2. If the supported layer is dynamically changed as described above, it is required to reconfigure the precoders adopted on the DM-RSs to match with each other, and the method of Alt-1.1 notifies the terminal of reconfigured precoder indexes through the DCI.

Alt-1.2 corresponds to a method for a terminal to blindly search for a precoder newly adopted on the DM-RS without an explicit indication. The terminal may analogize the location of the DM-RS to which the same precoder is adopted through rank information allocated to a terminal contained in DCI information and allocated by the terminal, and may find the adopted precoder from the pre-agreed order.

Alt-1.3 corresponds to a method for a base station to adjust a cycling pattern in accordance with the length of the OCC so that different precoders are not adopted between DM-RSs using the same OCC.

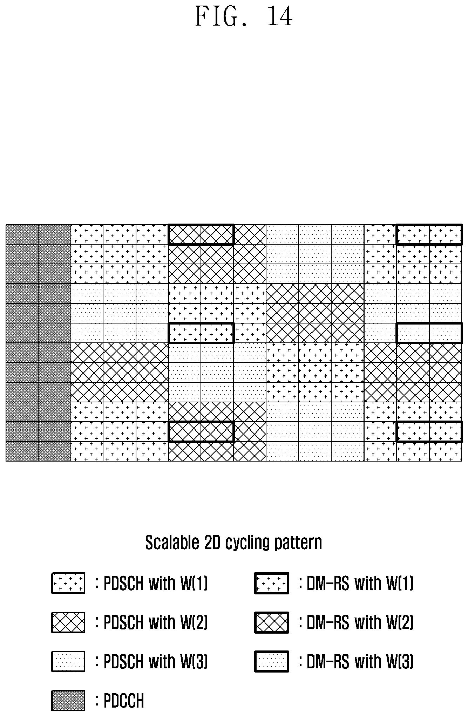

FIG. 14 illustrates an embodiment according to Alt-1.3 of the disclosure.

Referring to FIG. 14, an indication for a cycling pattern is given as x=3, y=3, and z=0. In this case, during transmission of the DM-RS in which the length of the OCC is 2, the channel estimation problem does not occur. However, in this case, a cycling pattern that does not satisfy criterion 2 may be generated. In this case, only Alt-1.1 or Alt-1.2 should be performed.

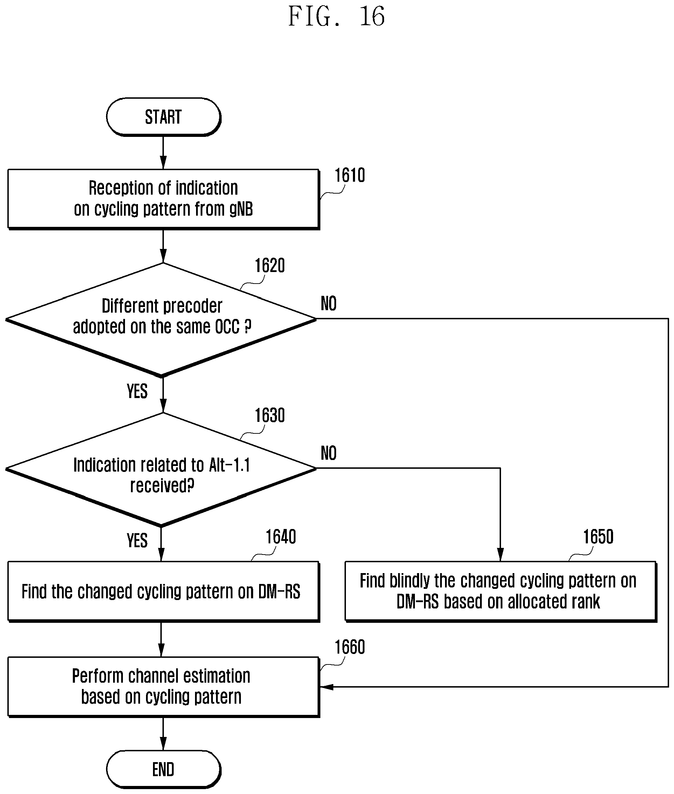

Procedures of a base station and a terminal as the above-described methods will be further described below with reference to FIG. 15 and 16. Although the operations related to the OCC of the DM-RS have been described in a state where an LTE system is exemplified, in case of the RS requiring the OCC, the exemplified method can be performed even in NR or other systems.

FIG. 15 is a flowchart illustrating an operation procedure of a base station for supporting a scalable predecoder pattern according to an embodiment of the disclosure.

Referring to FIG. 15, the base station generates an indication including at least a cycling domain, cycling granularity, and the cycling order at operation 1510.

If the indication is generated, the base station may determine whether to perform multilayer transmission at operation 1520. In case of the multilayer transmission as the result of the determination, the base station determines whether different precoders are adopted on the same OCC at operation 1530.

If the different precoders are adopted on the same OCC as the result of the determination, the base station may select one of three alternatives at operation 1540 as follows.

- Alt-1.1) A method in which the same precoder is adopted on a DM-RS corresponding to the same OCC, and a terminal is explicitly notified of the corresponding precoder through a DCI
- Alt-1.2) A method in which the same precoder is adopted on a DM-RS corresponding to the same OCC, and a terminal is implicitly notified of the precoder adopted on the DM-RS
- Alt-1.3) A method in which a cycling pattern is controlled so that the same precoder is adopted on a DM-RS in the same OCC through adjustment of cycling granularity in accordance with a layer

After the selected method is performed, an indication is transmitted through a PDCCH at operation 1550.

If it is determined that the previous transmission is not the multilayer transmission, or the same precoder is adopted on the same OCC, the base station may transmit the indication through the PDCCH without selecting the above-described alternative at operation 1550.

FIG. 16 is a diagram illustrating an operation procedure of a terminal for supporting a scalable predecoder cycling pattern according to an embodiment of the disclosure.

Referring to FIG. 16, the terminal operates to receive an indication on a cycling pattern from a g node B (gNB) at operation 1610. If the indication is received, the terminal determines whether different precoders are adopted on the same OCC at operation 1620.

If the different precoders are adopted on the same OCC as the result of the determination, the terminal determines whether an indication related to Alt-1.1 as described above is received at operation 1630. If it is determined that the indication is received, the terminal searches for a changed cycling pattern on the DM-RS based on the received indication at operation 1640. Thereafter, the terminal may perform channel estimation based on the searched cycling pattern at operation 1660.

Referring back to operation 1630, if an indication related to Alt-1.1 is not received, the terminal implicitly searches for the changed cycling pattern on the DM-RS based on an allocated rank at operation 1650 (i.e. Alt-1.2). Then, the terminal performs the channel estimation based on the searched cycling pattern at operation 1660.

Referring back to operation 1620, if the same precoder is adopted on the same OCC, the terminal performs the channel estimation based on the received cycling pattern at operation 1660.

The proposed operation method between the base station and the terminal for supporting the scalable cycling pattern may be expanded to an analog beam used in hybrid beamforming. The hybrid beamforming operates to dynamically allocate the analog beam, and through a beam sweeping or beam management procedure, the terminal report N optimum measured candidate analog beam (beams) to the base station. The base station may selectively use one or more of N beams reported from the terminal during servicing. Such an operation mechanism is similar to a precoder cycling operation mechanism. Accordingly, if the base station cycles and uses the N reported beams, support of high mobility of the terminal and diversity gain can be acquired in the same principle in the same manner as described above.

The beam cycling is different from the precoder cycling on the point that the beam cycling does not support FDM since the analog beam is generated on the time domain, and thus the cycling cannot be performed on the frequency domain, but can be performed only in the time domain. In the same manner, the beam pattern design criterion should satisfy the proposed criterion 1 and criterion 2, and in order to support a scalable beam cycling pattern, the base station should notify the terminal of information on the selected cycling pattern. In this case, the information should include at least cycling granularity, cycling order, and cycling start timing, and is reported to the terminal through higher layer signaling such as a radio resource control (RRC).

In this case, if OCC is adopted on an RS such as a CSI-RS, the RSs on which the same OCC is adopted should use the same beam. If different beams are adopted on the RS on which the same OCC is adopted due to the adopted cycling pattern, the same beam is re-adopted by controlling the beam adopted on the RS. In order to make the terminal know the order of beams re-adopted on the RS for the channel estimation, the following methods are proposed.

Alt-2.1. A method in which the same beam is adopted on an RS corresponding to the same OCC, and a terminal is explicitly notified of the corresponding beam through higher layer signaling

Alt-2.2. A method in which the same beam is adopted on an RS corresponding to the same OCC, and a terminal implicitly searches for a precoder adopted on the RS

Alt-2.3. A method in which a cycling pattern is controlled so that the same beam is adopted on an RS in the same OCC through adjustment of cycling granularity in accordance with an antenna port

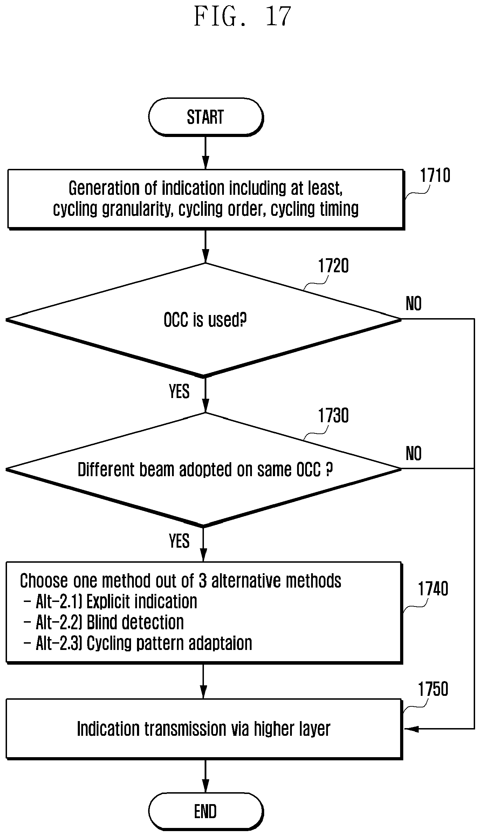

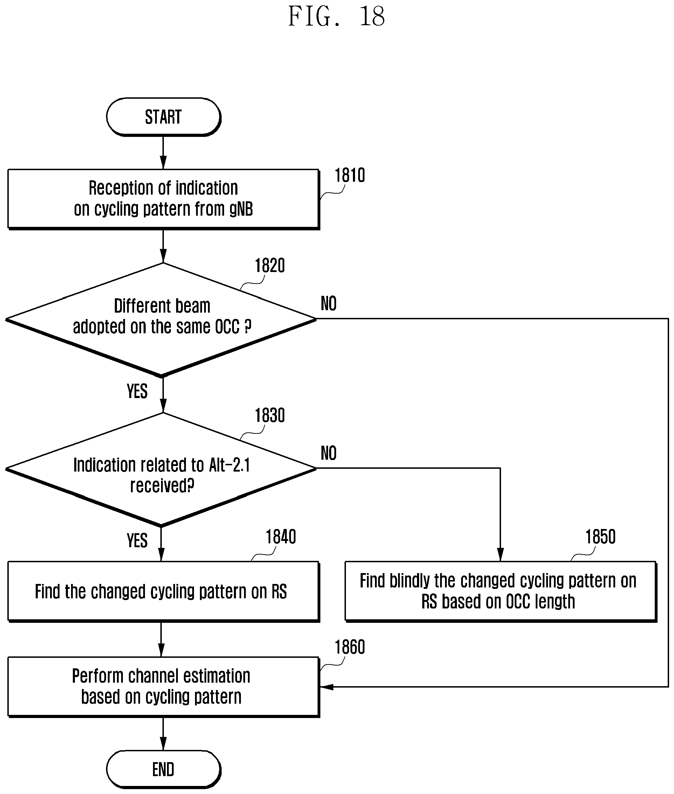

FIGS. 17 and 18 are flowcharts illustrating in detail respective operation procedures of a base station and a terminal as the above-described proposed methods.

FIG. 17 is a diagram illustrating an operation procedure of a base station for supporting a scalable analog beam cycling pattern according to an embodiment of the disclosure.

Referring to FIG. 17, the base station generates an indication including at least cycling granularity, the cycling order, and cycling timing at operation 1710.

If the indication is generated, the base station determines whether the OCC is used at operation 1720.

If the OCC is used as the result of the determination, the base station determines whether different beams are adopted on the same OCC at operation 1730. If the different beams are adopted, at operation 1740, the base station may select one of three alternatives as follows.

- Alt-2.1. A method in which the same beam is adopted on an RS corresponding to the same OCC, and a terminal is explicitly notified of the corresponding beam through higher layer signaling
- Alt-2.2. A method in which the same beam is adopted on an RS corresponding to the same OCC, and a terminal implicitly searches for a precoder adopted on the RS
- Alt-2.3. A method in which a cycling pattern is controlled so that the same beam is adopted on an RS in the same OCC through adjustment of cycling granularity in accordance with an antenna port

After the selected method is performed, the base station transmits an indication through a higher layer at operation 1750.

If it is determined that the OCC is not used at operation 1720, or the same beam is adopted on the same OCC at operation 1730, the base station may transmit the indication through the higher layer without the above-described selection process at operation 1750.

FIG. 18 is a diagram illustrating an operation procedure of a terminal for supporting a scalable analog beam cycling pattern according to an embodiment of the disclosure.

Referring to FIG. 18, the terminal operates to receive an indication on a cycling pattern from a gNB at operation 1810. If the indication is received, the terminal determines whether different beams are adopted on the same OCC at operation 1820.

If the different beams are adopted on the same OCC as the result of the determination, the terminal determines whether an indication related to Alt-2.1 as described above is received at operation 1830. If it is determined that the indication is received, the terminal searches for a changed cycling pattern on the RS based on the received indication at operation 1840. Thereafter, the terminal may perform channel estimation based on the searched cycling pattern at operation 1860.

Referring back to operation 1830, if an indication related to Alt-2.1 is not received, the terminal implicitly searches for the changed cycling pattern on the RS based on the length of the OCC at operation 1850 (i.e. Alt-2.2), and performs the channel estimation based on the searched cycling pattern at operation 1860.

Referring back to operation 1820, If the same beam is not adopted based on the same OCC, the terminal performs the channel estimation based on the received cycling pattern at 1860.

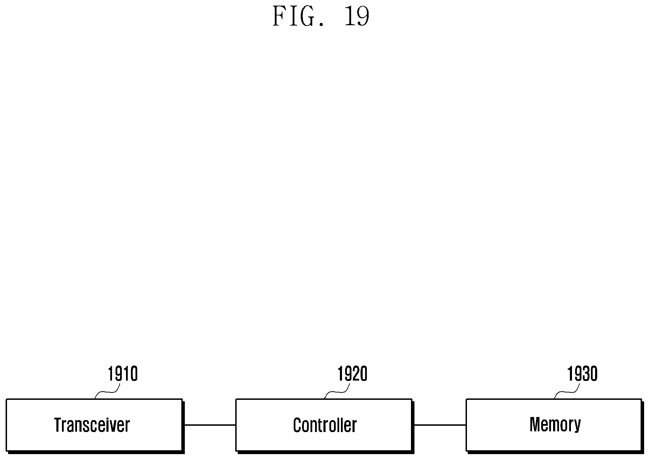

FIG. 19 is a block diagram of a UE according to an embodiment of the disclosure.

Referring to FIG. 19, a UE includes a transceiver (1910), a controller (1920) and a memory (1930). The controller (1920) may refer to a circuitry, an application-specific integrated circuit (ASIC), or at least one processor. The transceiver (1910), the controller (1920) and the memory (1930) are configured to perform the operations of the UE illustrated in the figures, e.g. FIGS. 4a to 9 and 13 to 18, or described in Embodiments 1 and 2.

Specifically, the transceiver (1910) is configured to receive signals from a base station and transmit signals to the base station. The controller (1920) is configured to shift first RBs associated with transmission in a first communication system ( NR system) by a certain frequency value ( 7.5 kHz) to match a grid of the first RBs with a grid of second RBs associated with transmission in a second communication system ( LTE system), and control the transceiver (1910) to transmit the shifted first RBs to the base station.

In addition, the controller (1920) may control the transceiver (1910) to receive information on whether the first communication system and the second communication system coexist in a same frequency band. The controller (1920) controls the transceiver (1910) to receive an indication to shift the first RBs by the certain frequency value, from the base station. The information and/or the indication may be received in at least one of a synchronization signal, a MIB on a PBCH, a SIB, or a RACH configuration (the alternatives of a synchronization signal, a MIB on a PBCH, a RACH configuration are not falling under the scope of protection of the present claims).

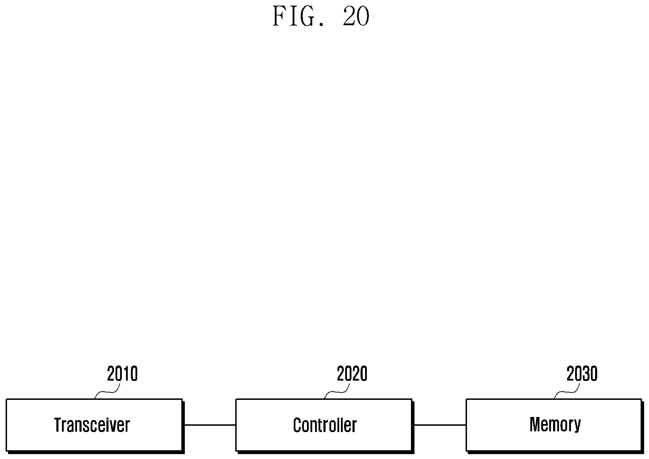

FIG. 20 is a block diagram of a base station according to an embodiment of the disclosure.

Referring to FIG. 20, a base station includes a transceiver (2010), a controller (2020) and a memory (2030). The controller (2020) may refer to a circuitry, an ASIC, or at least one processor. The transceiver (2010), the controller (2020) and the memory (2030) are configured to perform the operations of a base station (e.g. gNB, eNB) illustrated in the figures, e.g. FIGS. 4a to 9 and 13 to 18, or described in Embodiments 1 and 2.

Specifically, the transceiver (2010) is configured to receive signals from a UE and to transmit signals to the UE. The controller (2020) is configured to control the transceiver (2010) to transmit an indication to shift first RBs associated with transmission in a first communication system (NR system) by a certain frequency value ( 7.5 kHz) to match a grid of the first RBs with a grid of second RBs associated with transmission in a second communication system ( LTE system) to the UE, and control the transceiver (2010) to receive the shifted first RBs according to the indication and the second RBs from the UE.

In addition, the controller (2020) may control the transceiver (2010) to transmit information on whether the first communication system and the second communication system coexist in a same frequency band. The controller (2020) controls the transceiver (2010) to transmit the indication and/or the information using at least one of a synchronization signal, a MIB on a PBCH, a SIB, or a RACH configuration (the alternatives of a synchronization signal, a MIB on a PBCH, a RACH configuration are not falling under the scope of protection of the present claims).

On the other hand, embodiments of the disclosure described in the specification and drawings are merely specific examples presented to help understanding of the disclosure, and are not intended to limit the scope of the disclosure. That is, it will be apparent to those of ordinary skill in the art to which the disclosure pertains that various modifications can be realized based on the technical concept of the disclosure. Further, respective embodiments may be combined to be operated as needed. For example, parts of embodiments of the disclosure may be combined to operate a base station and a terminal. Further, although the above-described embodiments are presented based on an NR system, other modifications not falling under the scope of protection of the present claims based on the technical concept of the embodiments can be applied to other systems, such as frequency division duplexing (FDD) or time division duplexing (TDD) LTE systems.

Although preferred embodiments of the disclosure have been described in the specification and drawings and specific wordings have been used, these are merely used as general meanings to assist those of ordinary skill in the art to gain a comprehensive understanding of the disclosure, and do not limit the scope of the disclosure. It will be apparent to those of ordinary skill in the art to which the disclosure pertains that various modifications are possible based on the technical concept of the disclosure in addition to the embodiments disclosed herein.

While the disclosure has been shown and described with reference to various embodiments thereof, it will be understood by those skilled in the art that various changes in form and details may be made therein without departing from the scope of the disclosure as defined by the appended claims.

**Claims**

1. A method performed by a user equipment, UE, in a communication system, the method comprising:

   receiving, from a base station, a system information block, SIB;
   in a case that the SIB includes an indication indicating to shift first resource blocks, RBs, for a new radio, NR, system by a certain frequency value, shifting the first RBs by the certain frequency value to align a grid of the first RBs with a grid of second RBs for a long term evolution, LTE, system; and

transmitting, to the base station, an uplink signal on the first RBs shifted by the certain frequency value, wherein the certain frequency value is 7.5kHz, and wherein the uplink signal is transmitted using a 15kHz subcarrier spacing.

2. The method of claim 1, wherein the NR system and the LTE system coexist in a same frequency band.

3. The method of claim 1, wherein the first RBs are not shifted in case that the SIB does not includes the indication.

4. A method performed by a base station in a communication system, the method comprising:

transmitting, to a user equipment, UE, a system information block, SIB; and
receiving, from the UE, an uplink signal on first resource blocks, RBs, for a new radio, NR, system, according to the SIB,
wherein in a case that the SIB includes an indication indicating to shift the first RBs by a certain frequency value, the first RBs are shifted by the certain frequency value to align a grid of the first RBs with a grid of second RBs for a long term evolution, LTE, system, and
wherein the certain frequency value is 7.5kHz, and
wherein the uplink signal is received according to a 15kHz subcarrier spacing.

5. The method of claim 4, wherein the NR system and the LTE system coexist in a same frequency band.

6. The method of claim 4, wherein the first RBs are not shifted in case that the SIB does not includes the indication.

7. A user equipment, UE, in a communication system, the UE comprising:

a transceiver (1910); and
a controller (1920) configured to:

receive, from a base station via the transceiver, a system information block, SIB,
in a case that the SIB includes an indication indicating to shift first resource blocks, RBs, for a new radio, NR, system by a certain frequency value, shift the first RBs by the certain frequency value to align a grid of the first RBs with a grid of second RBs for a long term evolution, LTE, system, and
transmit, to the base station via the transceiver, an uplink signal on the first RBs shifted by the certain frequency value,

wherein the certain frequency value is 7.5kHz, and
wherein the uplink signal is transmitted using a 15kHz subcarrier spacing.

8. The UE of claim 7, wherein the NR system and the LTE system coexist in a same frequency band.

9. The UE of claim 7, wherein the first RBs are not shifted in case that the SIB does not includes the indication.

10. A base station in a communication system, the base station comprising:

a transceiver (2010); and
a controller (2020) configured to:

transmit, to a user equipment, UE, via the transceiver, a system information block, SIB, and
receive, from the UE via the transceiver, an uplink signal on first resource blocks, RBs, for a new radio, NR, system, according to the SIB,

wherein in a case that the SIB includes an indication indicating to shift the first RBs by a certain frequency value, the first RBs are shifted by the certain frequency value to align a grid of the first RBs with a grid of second RBs for a long term evolution, LTE, system, and
wherein the certain frequency value is 7.5kHz, and
wherein the uplink signal is received according to a 15kHz subcarrier spacing.

11. The base station of claim 10, wherein the NR system and the LTE system coexist in a same frequency band.

**12.** The base station of claim 10, wherein the first RBs are not shifted in case that the SIB does not includes the indication.

**Patentansprüche**

**1.** Verfahren, das von einem Benutzergerät, UE, in einem Kommunikationssystem ausgeführt wird, wobei das Verfahren Folgendes umfasst:

Empfangen eines Systeminformationsblocks, SIB, von einer Basisstation;
falls der SIB eine Angabe enthält, die anzeigt, dass die ersten Ressourcenblöcke, RBs, für ein neues Funk(NR)-System, um einen bestimmten Frequenzwert verschoben werden sollen, Verschieben der ersten RBs um den bestimmten Frequenzwert, um ein Gitter der ersten RBs mit einem Gitter von zweiten RBs für ein LTE(Long Term Evolution)-System auszurichten; und
Übertragen eines Uplink-Signals auf den um den bestimmten Frequenzwert verschobenen ersten RBs an die Basisstation,
wobei der bestimmte Frequenzwert 7,5 kHz ist, und
wobei das Uplink-Signal unter Verwendung eines Unterträgerabstands von 15 kHz übertragen wird.

**2.** Verfahren nach Anspruch 1, wobei das NR-System und das LTE-System in demselben Frequenzband koexistieren.

**3.** Verfahren nach Anspruch 1, wobei die ersten RBs nicht verschoben werden, falls der SIB die Angabe nicht enthält.

**4.** Verfahren, das von einer Basisstation in einem Kommunikationssystem ausgeführt wird, wobei das Verfahren Folgendes umfasst:

Übertragen eines Systeminformationsblocks, SIB, an ein Benutzergerät, UE; und
Empfangen eines Uplink-Signals vom UE auf ersten Ressourcenblöcken, RBs, für ein neues Funk(NR)-System gemäß dem SIB,
wobei, falls der SIB eine Angabe enthält, die anzeigt, dass die ersten RBs um einen bestimmten Frequenzwert verschoben werden sollen, die ersten RBs um den bestimmten Frequenzwert verschoben werden, um ein Gitter der ersten RBs mit einem Gitter von zweiten RBs für ein LTE(Long Term Evolution)-System auszurichten, und
wobei der bestimmte Frequenzwert 7,5 kHz ist, und
wobei das Uplink-Signal mit einem Unterträgerabstand von 15 kHz empfangen wird.

**5.** Verfahren nach Anspruch 4, wobei das NR-System und das LTE-System in demselben Frequenzband koexistieren.

**6.** Verfahren nach Anspruch 4, wobei die ersten RBs nicht verschoben werden, falls der SIB die Angabe nicht enthält.

**7.** Benutzergerät, UE, in einem Kommunikationssystem, wobei das UE Folgendes umfasst:

einen Transceiver (1910); und
eine Steuerung (1920), die konfiguriert ist zum:

Empfangen eines Systeminformationsblocks, SIB, von einer Basisstation über den Transceiver,
falls der SIB eine Angabe enthält, die anzeigt, dass die ersten Ressourcenblöcke, RBs, für ein neues Funk(NR)-System um einen bestimmten Frequenzwert verschoben werden sollen, Verschieben der ersten RBs um den bestimmten Frequenzwert, um ein Gitter der ersten RBs mit einem Gitter von zweiten RBs für ein LTE(Long Term Evolution)-System auszurichten, und
Übertragen eines Uplink-Signals auf den um den bestimmten Frequenzwert verschobenen ersten RBs an die Basisstation über den Transceiver,
wobei der bestimmte Frequenzwert 7,5 kHz ist, und
wobei das Uplink-Signal unter Verwendung eines Unterträgerabstands von 15 kHz übertragen wird.

**8.** UE nach Anspruch 7, wobei das NR-System und das LTE-System in demselben Frequenzband koexistieren.

**9.** UE nach Anspruch 7, wobei die ersten RBs nicht verschoben werden, falls der SIB die Angabe nicht enthält.

**10.** Basisstation in einem ersten Kommunikationssystem, wobei die Basisstation Folgendes umfasst:

einen Transceiver (2010); und

eine Steuerung (2020), die konfiguriert ist zum:

Übertragen eines Systeminformationsblocks, SIB, an ein Benutzergerät, UE, über den Transceiver, und Empfangen eines Uplink-Signals vom UE auf ersten Ressourcenblöcken, RBs, für ein neues Funk(NR)-System gemäß dem SIB über den Transceiver,

wobei, falls der SIB eine Angabe enthält, die anzeigt, dass die ersten Ressourcenblöcke, RBs, um einen bestimmten Frequenzwert verschoben werden sollen, die ersten RBs um den bestimmten Frequenzwert verschoben werden, um ein Gitter der ersten RBs mit einem Gitter von zweiten RBs für ein LTE(Long Term Evolution)-System auszurichten, und

wobei der bestimmte Frequenzwert 7,5 kHz ist, und

wobei das Uplink-Signal mit einem Unterträgerabstand von 15 kHz empfangen wird.

11. Basisstation nach Anspruch 10, wobei das NR-System und das LTE-System in demselben Frequenzband koexistieren.

12. Basisstation nach Anspruch 10, wobei die ersten RBs nicht verschoben werden, falls der SIB die Angabe nicht enthält.

## Revendications

1. Procédé exécuté par un équipement utilisateur, UE, dans un système de communication, le procédé comprenant :

recevoir, d'une station de base, un bloc d'informations système, SIB ;

dans le cas où le SIB inclut une indication indiquant de décaler les premiers blocs de ressources, RB, pour un nouveau système de radio, NR, par une valeur de fréquence donnée, décaler les premiers RB par la valeur de fréquence donnée pour aligner une grille des premiers RB avec une grille des deuxièmes RB pour un système d'évolution à long terme, LTE ; et

transmettre, à la station de base, un signal de liaison montante sur les premiers RB décalés d'une valeur de fréquence donnée,

où la valeur de fréquence donnée est de 7,5 kHz, et

où le signal de liaison montante est transmis en utilisant un espacement de sous-porteuse de 15 kHz.

2. Procédé selon la revendication 1, où le système NR et le système LTE coexistent dans une même bande de fréquences.

3. Procédé selon la revendication 1, où les premiers RB ne sont pas décalés dans le cas où le SIB n'inclut pas l'indication.

4. Procédé exécuté par une station de base dans un système de communication, le procédé comprenant :

transmettre, à un équipement utilisateur, UE, un bloc d'informations système, SIB; et

recevoir, de l'UE, un signal de liaison montante sur des premiers blocs de ressources, RB, pour un nouveau système radio, NR, selon le SIB,

où, dans le cas où le SIB inclut une indication indiquant de décaler les premiers RB d'une valeur de fréquence donnée, les premiers RB sont décalés de la valeur de fréquence donnée pour aligner une grille des premiers RB avec une grille des deuxièmes RB pour un système d'évolution à long terme, LTE, et

où la valeur de fréquence donnée est de 7,5 kHz, et

où le signal de liaison montante est reçu selon un espacement de sous-porteuse de 5 kHz.

5. Procédé selon la revendication 4, où le système NR et le système LTE coexistent dans une même bande de fréquences.

6. Procédé selon la revendication 4, où les premiers RB ne sont pas décalés dans le cas où le SIB n'inclut pas l'indication.

7. Équipement utilisateur, UE, dans un système de communication, l'UE comprenant :

un émetteur-récepteur (1910) et

un contrôleur (1920) configuré pour :

recevoir, d'une station de base via l'émetteur-récepteur, un bloc d'informations système, SIB,
dans le cas où le SIB inclut une indication indiquant de décaler les premiers blocs de ressources, RB, pour un nouveau système radio, NR, d'une valeur de fréquence donnée, décaler les premiers RB par la valeur de fréquence donnée pour aligner une grille des premiers RB avec une grille des deuxièmes RB pour un système d'évolution à long terme, LTE, et
transmettre, à la station de base via l'émetteur-récepteur, un signal de liaison montante sur les premiers RB décalés de la valeur de fréquence donnée,
où la valeur de fréquence donnée est de 7,5 kHz, et
où le signal de liaison montante est transmis en utilisant un espacement de sous-porteuse de 15 kHz.

8. UE selon la revendication 7, où le système NR et le système LTE coexistent dans une même bande de fréquences.

9. UE selon la revendication 7, où les premiers RB ne sont pas décalés dans le cas où le SIB n'inclut pas l'indication.

10. Station de base dans un système de communication, la station de base comprenant :

un émetteur-récepteur (2010) ; et
un contrôleur (2020) configuré pour :

transmettre, à un équipement utilisateur, UE, via l'émetteur-récepteur, un bloc d'informations système, SIB, et
recevoir, de l'UE via l'émetteur-récepteur, un signal de liaison montante sur des premiers blocs de ressources, RB, pour un nouveau système radio, NR, selon le SIB,

où, dans le cas où le SIB inclut une indication indiquant de décaler les premiers RB d'une valeur de fréquence donnée, les premiers RB sont décalés de la valeur de fréquence donnée pour aligner une grille des premiers RB avec une grille des deuxièmes RB pour un système d'évolution à long terme, LTE, et
où la valeur de fréquence donnée est de 7,5 kHz, et
où le signal de liaison montante est reçu selon un espacement de sous-porteuse de 15 kHz.

11. Station de base selon la revendication 10, où le système NR et le système LTE coexistent dans une même bande de fréquences.

12. Station de base selon la revendication 10, où les premiers RB ne sont pas décalés dans le cas où le SIB n'inclut pas l'indication.

# FIG. 1A

EP 4 084 563 B1

FIG. 1B

RB grid [12tones]

RB grid [13tones]

DC

RB grid [12tones]

-180

-90

0

90

180

Frequency [kHz]

FIG. 2A

FIG. 2B

## FIG. 3

# FIG. 4A

410

Sync. and PBCH (MIB) signal transmission

(/w indication whether to coexist with LTE system, and/or whether to perform a shift operation)

420

SIB transmission

430

RACH transmission

# FIG. 4B

410

Sync. and PBCH (MIB) signal transmission

420

SIB transmission

(/w indication whether to coexist with LTE system,
and/or whether to perform a shift operation)

430

RACH transmission

FIG. 5

FIG. 6

# FIG. 7

EP 4 084 563 B1

Guard-band ← → Guard-band

LTE RB grid

NR RB grid

0

f

FIG. 8

LTE

RB grid (12tones)    RB grid (12tones)

DC 1  2  3  4  5  6  7  8  9  10 11 12

...    ...

-180        -90        0         90        180    Frequency (kHz)

NR

RB grid (12tones)    RB grid (12tones)    15kHz

1  2  3  4  5  6  7  8  9  10 11 12

...    ...

-180        -90        0         90        180    Frequency (kHz)

EP 4 084 563 B1

FIG. 9

EP 4 084 563 B1

FIG. 10

Transparent DM-RS scheme

| | : DM-RS with W(1) | | : PDSCH with W(1) |
| | : DM-RS with W(2) | | : PDSCH with W(2) |
| | : DM-RS with W(3) | | : PDSCH with W(3) |
| | : PDCCH | | |

# FIG. 11

Non-transparent DM-RS scheme

▨ : DM-RS with W(1)          ▨ : PDSCH with W(1)

▨ : DM-RS with W(2)          ▨ : PDSCH with W(2)

▨ : DM-RS with W(3)          ▨ : PDSCH with W(3)

▨ : PDCCH

# FIG. 12

**Transparent DM-RS scheme**

⬚ : DM-RS with W(1)          ⬚ : PDSCH with W(1)

⬚ : DM-RS with W(2)          ⬚ : PDSCH with W(2)

⬚ : DM-RS with W(3)          ⬚ : PDSCH with W(3)

⬚ : PDCCH

# FIG. 13

Scalable 2D cycling pattern

| | | | |
|---|---|---|---|
| [PDSCH with W(1)] | : PDSCH with W(1) | [DM-RS with W(1)] | : DM-RS with W(1) |
| [PDSCH with W(2)] | : PDSCH with W(2) | [DM-RS with W(2)] | : DM-RS with W(2) |
| [PDSCH with W(3)] | : PDSCH with W(3) | [DM-RS with W(3)] | : DM-RS with W(3) |
| [PDCCH] | : PDCCH | | |

# FIG. 14

Scalable 2D cycling pattern

▦ : PDSCH with W(1)     ▦ : DM-RS with W(1)

▨ : PDSCH with W(2)     ▨ : DM-RS with W(2)

▢ : PDSCH with W(3)     ▢ : DM-RS with W(3)

▩ : PDCCH

# FIG. 15

```
                    ┌─────────────┐
                    │    START    │
                    └──────┬──────┘
                           │
        ┌──────────────────▼──────────────────┐
        │  Generation of indication including at least,  │  1510
        │  cycling domain, cycling granularity, cycling order │
        └──────────────────┬──────────────────┘
                           │
                    ◇──────────────◇   1520
            ┌──◇  Multi-layer transmission ?  ◇──── NO ──┐
            │   ◇──────────────◇                         │
           YES                                           │
            │                                            │
            ▼   1530                                     │
    ◇──────────────◇                                     │
 ┌─◇ Different precoder adopted on same OCC ? ◇── NO ────┤
 │  ◇──────────────◇                                     │
YES                                                      │
 │                                                       │
 ▼                                                       │
┌──────────────────────────────────────┐  1540          │
│ Choose one method out of 3 alternative methods │       │
│  – Alt-1.1) Inculde explicit indication │       │
│  – Alt-1.2) Blind detection            │                │
│  – Alt-1.3) Cycling pattern adaptaion  │                │
└──────────────────┬───────────────────┘                │
                   │                         1550         │
        ┌──────────▼──────────────────────────┐◄─────────┘
        │    Indication transmission via PDCCH    │
        └──────────────────┬──────────────────┘
                           │
                    ┌──────▼──────┐
                    │     END     │
                    └─────────────┘
```

# FIG. 16

START

Reception of indication
on cycling pattern from gNB — 1610

1620
Different precoder
adopted on the same OCC ? — NO

YES

1630
Indication related to Alt-1.1
received? — NO

YES

Find the changed cycling pattern on DM-RS — 1640

Find blindly the changed cycling pattern on DM-RS based on allocated rank — 1650

Perform channel estimation
based on cycling pattern — 1660

END

FIG. 17

```
                        ┌─────────────┐
                        │    START    │
                        └─────────────┘
                               │
                               ▼
        ┌──────────────────────────────────────────┐
        │  Generation of indication including at least,  │  1710
        │  cycling granularity, cycling order, cycling timing │
        └──────────────────────────────────────────┘
                               │
                               ▼
                          1720
                      ╱─────────────╲
                     ╱               ╲         NO
                    ╱   OCC is used?   ╲ ──────────────┐
                     ╲               ╱                 │
                      ╲─────────────╱                  │
                          │ YES                        │
                          ▼                            │
                          1730                         │
                      ╱─────────────╲                  │
                     ╱               ╲      NO          │
            ┌───────╱ Different beam adopted on same OCC ? ╲──────┤
                     ╲               ╱                  │
                      ╲─────────────╱                   │
                          │ YES                         │
                          ▼                             │
        ┌──────────────────────────────────────────┐   │
        │ Choose one method out of 3 alternative methods │  1740
        │  - Alt-2.1) Explicit indication             │   │
        │  - Alt-2.2) Blind detection                 │   │
        │  - Alt-2.3) Cycling pattern adaptaion       │   │
        └──────────────────────────────────────────┘   │
                          │                             │
                          ▼                        1750 │
        ┌──────────────────────────────────────────┐   │
        │     Indication transmission via higher layer   │◄──┘
        └──────────────────────────────────────────┘
                          │
                          ▼
                   ┌─────────────┐
                   │     END     │
                   └─────────────┘
```

# FIG. 18

```
                    ┌──────────────┐
                    │    START     │
                    └──────┬───────┘
                           │
                           ▼
        ┌──────────────────────────────────┐  1810
        │      Reception of indication      │
        │     on cycling pattern from gNB   │
        └──────────────────┬───────────────┘
                           │
                           ▼
                        1820
              ╱╲
        ╱──────────────╲          NO
       ╱ Different beam  ╲ ─────────────────────────┐
       ╲ adopted on the  ╱                          │
        ╲  same OCC ?   ╱                           │
         ╲──────────────╱                           │
              │ YES                                 │
              ▼                                     │
           1830                                     │
              ╱╲                                    │
        ╱──────────────╲          NO                │
       ╱ Indication      ╲ ──────────────┐          │
       ╲ related to Alt-2.1╱             │          │
        ╲  received?     ╱               │          │
         ╲──────────────╱                ▼          │
              │ YES        1840       1850          │
              ▼                                     │
   ┌──────────────────────┐  ┌─────────────────────┐│
   │ Find the changed      │  │ Find blindly the    ││
   │ cycling pattern on RS │  │ changed cycling      ││
   └──────────┬───────────┘  │ pattern on RS based  ││
              │               │ on OCC length        ││
              │               └──────────┬──────────┘│
              ▼           1860           │           │
   ┌──────────────────────┐             │           │
   │ Perform channel       │◄────────────┴───────────┘
   │ estimation based on   │
   │ cycling pattern       │
   └──────────┬───────────┘
              │
              ▼
        ┌──────────────┐
        │     END      │
        └──────────────┘
```

FIG. 19

```
     1910              1920              1930
 ┌─────────────┐   ┌─────────────┐   ┌─────────────┐
 │ Transceiver │───│ Controller  │───│   Memory    │
 └─────────────┘   └─────────────┘   └─────────────┘
```

FIG. 20

| 2010 | 2020 | 2030 |
|------|------|------|
| Transceiver | Controller | Memory |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HUAWEI.** Consideration of PRB misalignment between NR and LTE in the coexistence case. *R1-1700030*